# FASCICULE DE BREVET EUROPEEN

(11) **EP 3 357 261 B1**
(45) Date de publication et mention de la délivrance du brevet: **01.12.2021**
(21) Numéro de dépôt: 16785226.8
(22) Date de dépôt: 27.09.2016
(51) Int. Cl.: H04W 4/02, H04W 88/06

(54) **DISPOSITIF POUR L'ASSOCIATION D'UN IDENTIFIANT DE TÉLÉPHONIE MOBILE ET D'UN IDENTIFIANT DE RÉSEAU INFORMATIQUE**
KOMMUNIKATIONSVORRICHTUNG ZUM ZUORDNEN EINES MOBILTELEFONIDENTIFIKATORS UND EINES COMPUTERNETZWERKIDENTIFIKATORS
COMMUNICATION DEVICE FOR ASSOCIATING A MOBILE TELEPHONY IDENTIFIER AND A COMPUTER NETWORK IDENTIFIER

(30) Priorité: 02.10.2015 FR 1559392
(43) Date de publication de la demande: 08.08.2018
(73) Titulaire: Intersec, 92085 Paris La Défense Cedex (FR)
(72) Inventeur: COÏC, Jean-Marc, 92340 Bourg la Reine (FR)
(74) Mandataire: Cabinet Netter
(86) Numéro de dépôt international: PCT/FR2016/052448
(87) Numéro de publication internationale: WO 2017/055730

(56) Documents cités:
- WO-A1-2013/028143
- US-A1- 2013 124 333
- US-A1- 2014 114 561
- US-A1- 2014 221 004
- US-A1- 2015 079 932
- MORRIS B ET AL: "Learning trajectory patterns by clustering: Experimental studies and comparative evaluation", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 juin 2009 (2009-06-20), pages 312-319, XP031607086, ISBN: 978-1-4244-3992-8 cité dans la demande

## Description

L'invention concerne le domaine des télécommunications, et plus particulièrement de la communication géolocalisée passivement.

De nombreux dispositifs sont maintenant munis d'interfaces de télécommunication à la fois téléphonique et informatique. Par exemple, la plupart des téléphones modernes présentent à la fois une puce de téléphonie (2G, 3G, 4G, etc.), et une puce radio permettant de se connecter à un réseau Wifi.

La demanderesse est spécialisée dans l'analyse de données des réseaux téléphoniques permettant de fournir des données de géolocalisation, en particulier par l'analyse des données de signalisation émise lors de l'interaction d'un dispositif de télécommunication avec un réseau de téléphonie.

Les connexions aux réseaux informatiques, par exemple de type Wifi permettent également de fournir des services de géolocalisation, également par analyse de la signalisation avec le réseau informatique.

Il pourrait être très intéressant de réussir à utiliser les données de géolocalisation de téléphonie et/ou de réseau informatique pour communiquer avec les dispositifs de télécommunication de la manière la plus efficace.

Par exemple, cela permettrait de transmettre des informations d'urgence (incendie, météo ou autre) aux dispositifs de télécommunication, lorsque l'un des deux réseaux est en panne ou inefficace, ou pour s'assurer d'une diffusion maximale. D'autres cas d'usage peuvent également être envisagés.

Le document WO2013/028143 décrit un procédé pour suivre la position d'un terminal mobile dans une zone spécifique. En particulier, un serveur mémorise le contenue d'un paquet, le temps d'arrivée et détermine la position en utilisant des points fixes d'un grid. De plus, il détermine la trajectoire du terminal mobile en corrélant les adresses MAC ou IMSI des paquets.

Le document US2013/124333 décrit que, en se basant sur la similarité entre les routes empruntées par un premier et un deuxième dispositif, il est possible de déterminer si lesdits dispositifs appartiennent à un même utilisateur.

Le document US2014/114561 décrit l'estimation d'une trajectoire en déterminant un mode de mouvement associé et en prenant en compte des différents seuils.

Document US2014/221004 décrit un procédé de corrélation entre des coordonnées de localisation cellulaire et WiFi.

Le document US2015/079932 décrit un procédé de détermination de la trajectoire d'un téléphone mobile en utilisant des rapports de localisation envoyés par ceci. En particulier, au moins un arrêt dans l'historique de localisation est identifié et supprimé.

Cependant, aucune solution n'existe pour associer l'identifiant de téléphonie mobile et l'identifiant de réseau informatique d'un dispositif de télécommunication. En effet, l'identifiant de téléphonie mobile est en général associé à une carte SIM indépendante du dispositif de télécommunication.

L'invention vient améliorer la situation. À cet effet, l'invention propose un dispositif de communication selon la revendication 1.

Ce dispositif est avantageux car il permet d'associer de manière anonyme et fiable un identifiant de téléphonie mobile et un identifiant de réseau informatique. Il devient ainsi possible, par géorepérage (*geofencing* en anglais) de communiquer avec un dispositif de télécommunication de manière plus efficace.

Dans certaines variantes, le dispositif pourra présenter une ou plusieurs des caractéristiques suivantes :
- l'apparieur écarte les données de trajectoire associées à un identifiant de téléphonie mobile ou à un identifiant de réseau informatique qui désignent un même emplacement et qui, pour une période temporelle donnée, présentent un nombre d'occurrences supérieur à un seuil choisi,
- l'apparieur calcule la valeur de similarité à partir d'une distance choisie dans un groupe comprenant le DTW, le LCSS, et la distance PF,
- l'apparieur associe un identifiant de téléphonie mobile à un identifiant de réseau informatique donnés lorsque la valeur de similarité de leurs données de trajectoire associées est inférieure à un seuil choisi,
- l'apparieur dissocie un identifiant de téléphonie mobile à un identifiant de réseau informatique associés lorsque la valeur de similarité entre les données de trajectoire associées audit identifiant de téléphonie mobile et des données de trajectoire associées à un autre identifiant de réseau informatique ou la valeur de similarité entre les données de trajectoire associées audit identifiant de réseau informatique et des données de trajectoire associées à un autre identifiant de téléphonie mobile est inférieure à un seuil choisi,
- le dispositif comprend en outre un émetteur agencé, à détection d'un identifiant de réseau informatique associé par l'apparieur à un identifiant de téléphonie mobile, pour émettre un message téléphonique de type textuel ou multimédia vers le dispositif désigné par ledit identifiant de téléphonie mobile,
- le dispositif comprend en outre en outre un émetteur agencé, à détection d'un identifiant de téléphonie mobile associé par l'apparieur à un identifiant de réseau informatique, pour émettre un message informatique de type textuel ou multimédia vers le dispositif désigné par ledit identifiant de réseau informatique, et
- le classificateur et l'analyseur sont appelés séquentiellement pour produire des données de trajectoire, et/ou dans lequel l'analyseur applique la règle a) avant d'appliquer la règle b), et/ou l'analyseur applique la règle b) avant d'appliquer la règle c), et/ou dans lequel l'analyseur applique la règle c) avant d'appliquer la règle d) et/ou dans lequel l'analyseur applique l'une des règles a), b), c) et d) avant d'appliquer la règle e).

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique d'un dispositif selon l'invention,
- la figure 2 représente un exemple de mise en œuvre du dispositif selon l'invention,
- la figure 3 représente une vue schématique d'un mode de réalisation de l'extracteur de la figure 1,
- la figure 4 représente un exemple de mise en œuvre d'une fonction par le classificateur de la figure 3,
- les figures 5 à 9 représentent des exemples de mise en œuvre de fonctions par l'analyseur de la figure 3, et
- la figure 10 représente un exemple de mise en œuvre de l'apparieur de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

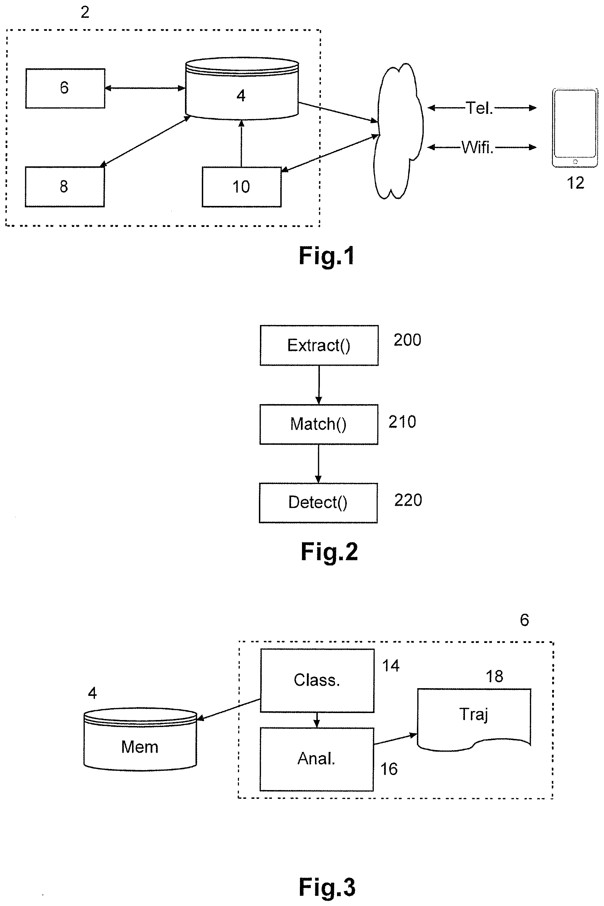

La figure 1 représente une vue schématique d'un dispositif de détermination de trajectoire selon l'invention.

Le dispositif 2 comprend une mémoire 4, un extracteur 6, un apparieur 8 et un émetteur 10. Le dispositif 2 utilise les données échangées par une pluralité de dispositifs mobiles 12 avec un réseau de téléphonie mobile d'une part, et avec un réseau informatique d'autre part.

Dans l'exemple décrit ici, l'extracteur 6, l'apparieur 8 et l'émetteur 10 sont des éléments accédant directement ou indirectement à la mémoire 4. Ils peuvent être réalisés sous la forme d'un code informatique approprié exécuté sur un ou plusieurs processeurs.

Dans l'exemple décrit ici, la mémoire 4 reçoit des données d'un opérateur de téléphonie mobile (que ce soit en GSM, GPRS, EDGE, UMTS, LTE, ou leur évolution), ainsi que des données d'un opérateur de réseau informatique (par exemple un réseau WiFi étendu de type « hotspot » ou autre). La mémoire 4 contient l'ensemble des données de signalisation et d'activité d'une, plusieurs ou toutes les zones géographiques desservies par l'opérateur de téléphonie mobile et l'opérateur de réseau informatique.

La mémoire 4 peut être directement accessible ou déportée, répartie sur un ou plusieurs sites, correspondre à l'agrégation de plusieurs stockages distincts, y compris appartenant à plusieurs opérateurs mettant leurs ressources en commun. La mémoire 4 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 4, ou sur celle-ci. Ces données peuvent être effacées après que le dispositif ait effectué ses tâches ou conservées.

Les données de signalisation associent un identifiant de dispositif mobile de communication, un identifiant de signalisation et un marqueur temporel. Le marqueur temporel peut être un marqueur brut ou être accompagné d'une durée. Les dispositifs mobiles de communication peuvent être tout dispositif se connectant à un réseau de téléphonie mobile GSM, GPRS, EDGE, UMTS, LTE ou leur évolution, et à un réseau informatique, par exemple un réseau WiFi étendu de type « hotspot ». Les identifiants de signalisation peuvent être tirés de toute signalisation sur ces réseaux, ou d'une triangulation à partir de ces identifiants, et/ou à des données de type GPS communiquées par le dispositif. Dans le cas de la téléphonie mobile, les données de signalisation sont obtenues par analyse des échanges entre un dispositif et le réseau de téléphonie mobile auquel il est connecté. Dans le cas du réseau informatique, les données peuvent être récoltées passivement, c'est-à-dire que le dispositif n'a pas besoin d'être connecté, ses interactions de recherche de réseau étant suffisantes, sans que l'utilisateur n'ait besoin de s'identifier ou de se connecter.

Par processeurs, il doit être compris tout processeur adapté aux calculs décrits ci-après. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

La figure 2 représente un exemple de fonctionnement du dispositif 2. Dans une opération 200, l'extracteur 6 exécute une fonction Extract(). La fonction Extract() accède aux données de signalisation dans la mémoire 4 et détermine des données de trajectoire pour l'ensemble des identifiants de téléphonie mobile ainsi que l'ensemble des identifiants de réseau informatique. Un exemple de réalisation de l'extracteur 6 et de sa mise en œuvre est décrit avec les figures 3 à 9.

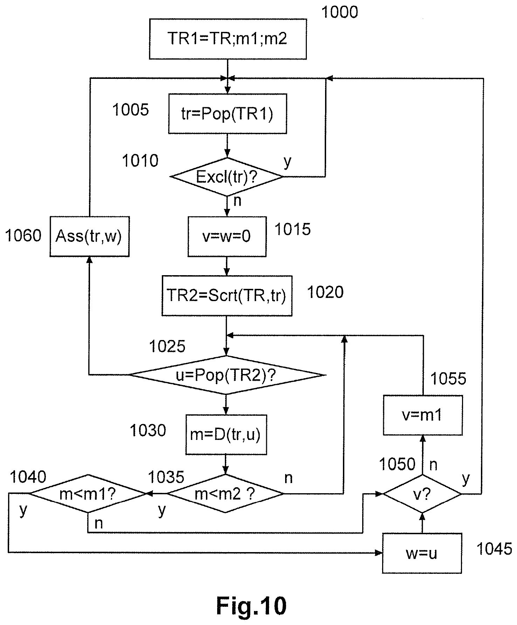

Ensuite, dans une opération 210, l'apparieur 8 exécute une fonction Match() compare entre elles les données de trajectoire issues de l'opération 200, et en tire une pluralité de paires qui associent chacune un identifiant de téléphonie mobile et un identifiant de réseau informatique. Un exemple de mise en œuvre de l'apparieur 8 est décrit avec la figure 10.

Enfin, dans une opération 220, l'émetteur 10 exécute une fonction Detect() qui analyse les identifiants de téléphonie mobile et les identifiants de réseau informatique dans une zone choisie, et communique d'une manière choisie avec les dispositifs détectés dont l'identifiant de téléphonie mobile et ou l'identifiant de réseau informatique appartient à une paire issue de l'opération 210.

Dans l'exemple décrit ici, l'exécution des opérations 200 et 210 est chronologique, c'est-à-dire que l'apparieur 8 n'exécute la fonction Match() que lorsque toutes les données de trajectoire ont été déterminées dans l'opération 200. Cependant, dans certaines variantes, cette opération pourrait commencer dès qu'un nombre choisi de données de trajectoire a été déterminé. De manière similaire, l'opération 220 n'est exécutée qu'après que l'opération 210 soit terminée. Cependant, là encore, selon certaines variantes, ces deux opérations pourraient être exécutées en partie simultanément.

Enfin, la figure 2 ne doit pas être vue de manière statique : afin d'être le plus efficace possible, le dispositif 2 pourra régulièrement relancer l'exécution des opérations 200 et 210 pour maintenir une liste de paires d'identifiants de téléphonie mobile et d'identifiant de réseau informatique le plus à jour possible. Pendant cette mise à jour, l'opération 220 pourra continuer d'être exécutée avec les paires existantes.

Dans ce qui suit, l'identifiant de téléphonie mobile utilisé est un identifiant lié à la carte SIM permettant de connecter le dispositif au réseau de téléphonie mobile. En variante, cet identifiant peut être tout identifiant qui permet d'identifier de manière univoque un dispositif sur un réseau de téléphonie mobile. De même, l'identifiant de réseau informatique est l'adresse MAC de l'interface permettant d'accéder au réseau informatique. Là encore, selon les réseaux informatiques, d'autres identifiants pourront être utilisés.

La figure 3 représente une vue schématique d'un mode de réalisation de l'extracteur 6, qui comprend un classificateur 14 et un analyseur 16 qui produisent ensemble des données de trajectoire 18.

L'extracteur 6 va dans un premier temps analyser les données de signalisation associées à chaque identifiant de téléphonie mobile et à chaque identifiant de réseau informatique afin d'adjoindre un marqueur de déplacement à la cellule de localisation correspondant aux identifiants de signalisation et aux marqueurs temporels associés. Ce triplet constitue ce qui sera par la suite appelé un évènement.

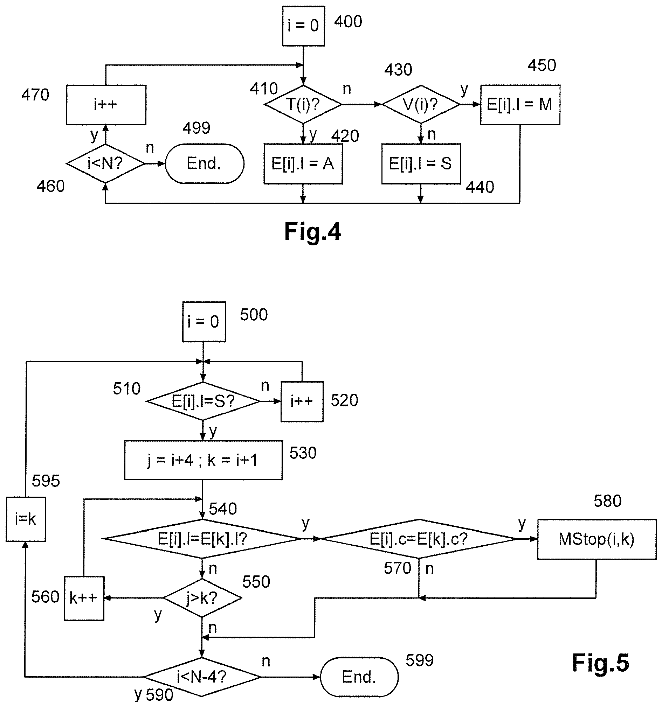

La figure 4 représente un exemple d'une fonction mise en œuvre par le classificateur 14 pour réaliser cela.

Dans une opération 400, le classificateur 14 initialise un indice de boucle i à 0. Ensuite, dans une opération 410, une fonction T() est exécutée pour analyser le marqueur de temps associé à l'identifiant de signalisation d'indice i. La fonction T() détermine le temps qui s'est écoulé entre le marqueur de temps associé à l'identifiant de signalisation d'indice i et le marqueur précédent. Si la durée est supérieure à un seuil choisi (par exemple supérieure à 4 heures, ou 6 heures, ou plus), alors dans une opération 420, un marqueur de déplacement de type arrêt long est associé à la cellule de localisation et au marqueur de temps associés à l'identifiant de signalisation d'indice i.

Les marqueurs de temps de type arrêt long sont importants car ils servent à « découper » les suites d'évènements. Ainsi, tous les traitements décrits ci-après concernent des séquences d'évènements situés entre deux événements indiquant un arrêt long. À tout le moins, dès qu'un arrêt long est détecté, deux séquences sont générées qui seront traitées de manière indépendante.

Sinon, dans une opération 430, une fonction V() est exécutée pour déterminer la différence d'emplacement entre la cellule de localisation associée à l'identifiant de signalisation d'indice i et celle associée à l'identifiant de signalisation d'indice i précédent. Si la fonction V() indique que la vitesse de déplacement entre ces cellules de localisation est inférieure à une vitesse seuil (égale à environ 10 km/h par exemple), alors dans une opération 440, un marqueur de déplacement de type arrêt court est associé à la cellule de localisation et au marqueur de temps associés à l'identifiant de signalisation d'indice i. Sinon, dans une opération 450, un marqueur de déplacement de type mouvement est associé à la cellule de localisation et au marqueur de temps associés à l'identifiant de signalisation d'indice i. Ainsi, les événements désignent des paires d'identifiants de signalisation associés à un même dispositif de communication mobile et consécutifs temporellement, et un événement n'est de type mouvement que si la vitesse de déplacement perçue est au moins aussi rapide qu'une vitesse de marche. En variante, la fonction V() pourrait déterminer si la cellule de localisation n'a pas changé entre les deux identifiants de signalisation successifs au lieu de se baser sur la vitesse de déplacement.

Après l'association d'un marqueur par l'une des opérations 420, 440 ou 450, une opération 460 teste si tous les identifiants de signalisation ont été parcourus. Lorsque cela n'est pas le cas, l'indice i est incrémenté dans une opération 470. Sinon, la fonction se termine dans une opération 499.

Une fois que toutes les données ont été marquées, le dispositif 2 peut procéder à leur traitement. En effet, de nombreuses données de signalisation peuvent ne pas représenter un déplacement d'une personne. Par exemple, un dispositif de communication peut être entouré de plusieurs antennes, et pour diverses raisons être attaché successivement à diverses de ces antennes, sans pour autant se déplacer. Dans ce cas, les données de signalisation indiqueront des cellules de localisation distinctes, ce qui suggère un déplacement, alors que le dispositif de communication (et donc son utilisateur) ne s'est pas déplacé. De nombreux autres cas de figures qui ajoutent du bruit peuvent exister et doivent être traités pour obtenir des données de trajectoire fiables.

Les exemples de fonctions représentées sur les figures 5 à 9 montrent comment l'analyseur 16 traite les données marquées pour en tirer des données de trajectoire.

La figure 5 représente un exemple de mise en œuvre d'une première fonction. Cette fonction traite du cas décrit plus haut. Ainsi, lorsqu'entre deux données de localisation dont le marqueur de déplacement indique un arrêt court dans une même cellule de localisation et qui sont séparés par moins de quatre évènements, tous les marqueurs de déplacement sont convertis en arrêt court.

Ainsi, dans une opération 500, un indice de boucle i est initialisé à 0. Ensuite dans une opération 510, un test est réalisé pour déterminé si l'évènement d'indice i a un marqueur de déplacement E[i].1 qui indique un arrêt court ou pas. Tant que ce n'est pas le cas, l'indice i est incrémenté dans une opération 520 et le test de l'opération 510 est répété.

Dès qu'un arrêt court est détecté, un indice j est défini avec la valeur i ajoutée de 4, et un indice de boucle k est défini avec la valeur i ajoutée de 1 dans une opération 530. Ensuite, une boucle détermine s'il existe un événement entre i et j qui est également un arrêt court. Pour cela, un test est fait dans une opération 540. Tant que ce test n'est pas positif, un test dans une opération 550 vérifie que k est inférieur à j, et k est incrémenté dans une opération 560.

Lorsqu'un arrêt court est trouvé, un test dans une opération 570 vérifie si les deux événements E[i] et E[k] partagent la même cellule de localisation. Si c'est le cas, alors on a bien deux évènements avec un marqueur de déplacement de type arrêt court, et qui sont séparés par moins de quatre évènements. Alors, une fonction MStop() recevant i et k comme arguments transforme tous les marqueurs de déplacement E[n].l en arrêt court, avec n compris entre i et k.

Ensuite, ou lorsque l'opération 550 détermine qu'il n'y a pas d'évènement de type arrêt court à moins de 4 évènements de l'évènement i, ou lorsque les cellules de localisation de l'évènement i et celle de l'évènement k sont distinctes, un test dans une opération 590 vérifie s'il reste encore 4 opérations pour relancer une boucle. Si oui, alors dans une opération 595, l'indice i est mis à jour avec l'indice k et la boucle reprend avec l'opération 510. Sinon, la fonction se termine dans une opération 599.

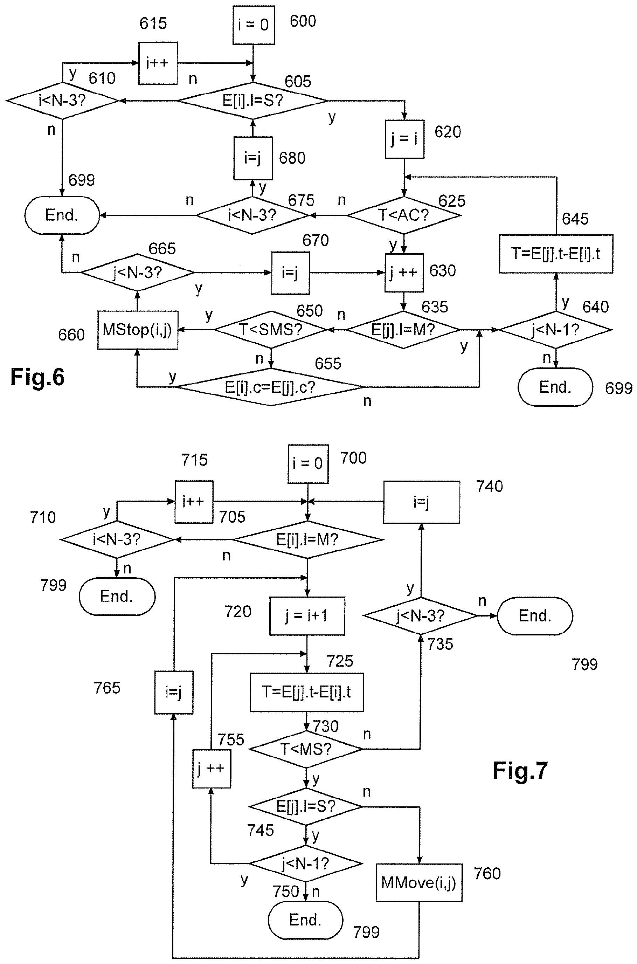

La figure 6 représente un autre exemple d'une fonction mise en œuvre par l'analyseur 16. En effet, lorsque deux événements dont les marqueurs de déplacement indiquent un arrêt court sont séparés par une durée, et que ces événements sont séparés par une durée inférieure à un premier seuil permettant de passer d'une cellule à une autre, ou que les deux événements sont associés à la même cellule de localisation mais que leurs marqueurs de temps sont séparés par une durée supérieure à un deuxième seuil indiquant que l'aller-retour vers une cellule voisine n'était pas possible, alors tous les événements entre ceux-ci sont modifiés de sorte que leur marqueur de déplacement indique un arrêt court.

Ainsi, dans une opération 600, un indice i de boucle est initialisé à 0. Ensuite, dans une opération 605, un test est réalisé pour déterminé si l'évènement d'indice i courant est associé à un arrêt court ou pas. Tant que ce test est négatif, dans une opération 610 teste s'il reste au moins trois événements (puisque la fonction cherche au minimum un événement entre deux événements de type arrêt court), et, si c'est le cas, l'indice i est incrémenté dans une opération 615 et le test de l'opération 605 est répété. Si ce n'est pas le cas, la fonction se termine dans une opération 699.

Lorsqu'un événement dont le marqueur de déplacement indique un arrêt court est trouvé, une boucle à deux tests est lancée afin d'essayer de vérifier si l'une des deux conditions ci-dessus est remplie. Pour cela, dans une opération 620, un indice j égal à i est défini.

Ensuite, une boucle commence dans laquelle deux conditions sont recherchées. Si l'une de ces deux conditions est remplie, alors les événements situés entre les deux événements les plus extrêmes temporellement sont modifiés pour les marquer comme correspondant à un arrêt court.

Ainsi, dans une opération 625, la condition d'arrêt la moins contraignante est testée, en comparant une durée T qui indique la différence entre le marqueur temporel de l'évènement d'indice j courant et celui de l'évènement d'indice i. Si la durée T est inférieure à ce premier seuil AC, alors l'indice j est incrémenté dans une opération 630.

Puis, dans une opération 635, un test détermine si l'évènement d'indice j indique un mouvement ou un arrêt court. S'il s'agit d'un mouvement, alors dans une opération 640, un test détermine si l'évènement d'indice j est le dernier ou pas. Si c'est le cas, alors la fonction se termine avec l'opération 699. Sinon, une durée T correspondant à la différence entre le marqueur de temps de l'évènement d'indice i et l'évènement d'indice j est calculée dans une opération 645, puis la boucle reprend avec l'opération 625, jusqu'à ce qu'un événement indiquant un arrêt court soit rencontré dans l'opération 635.

Lorsqu'un deuxième événement indiquant un arrêt court est trouvé dans l'opération 635, un test dans une opération 650 détermine si la durée T est inférieure à un deuxième seuil SMS. Si c'est le cas, alors la deuxième condition (la plus contraignante) est remplie, et dans une opération 660, la fonction MStop() est appelée avec les indices i et j pour modifier les marqueurs de déplacement des événements entre ces indices en arrêt court. Ensuite, un test est réalisé dans une opération 665 pour déterminer s'il reste encore 3 événement dans la liste E[], comme pour l'opération 610..

Si ce n'est pas le cas, alors un test est réalisé dans une opération 655 pour déterminer si les événements d'indices i et j concernent la même cellule de localisation. Si c'est le cas, alors la première condition est remplie, et dans une opération 660, la fonction MStop() est appelée avec les indices i et j pour modifier les marqueurs de déplacement des évènements entre ces indices en arrêt court, puis le test de l'opération 665 est réalisé.

Si le test de l'opération 655 est négatif, alors la boucle se poursuit avec l'opération 640 jusqu'à ce que la première condition soit remplie ou que la durée T excède le premier seuil AC, ou que l'opération 640 indique la fin de la boucle.

Enfin, lorsque le test de l'opération 665 est positif, alors l'indice i est mis à jour avec la valeur de l'indice j (puisque l'évènement d'indice j indique un arrêt court) dans une opération 670, et la boucle reprend avec l'opération 630.

Le premier seuil AC et le deuxième seuil SMS sont prévus de sorte que AC est supérieur à SMS. Le premier seuil AC permet de détecter les cas indiquant un changement de cellule puis un retour à la cellule originale, alors que le temps nécessaire pour cela (le temps correspondant au premier seuil AC), n'était pas suffisant. De manière similaire, le deuxième seuil SMS désigne un temps estimé nécessaire pour passer d'une cellule à une autre cellule voisine.

Dans l'exemple décrit ici, le premier seuil AC est d'environ 10 minutes, tandis que le deuxième seuil SMS est d'environ 6 minutes. Ainsi, la fonction va transformer en arrêt courts les événements associés à un mouvement compris entre deux événements associés à un arrêt court et séparés de moins de 6 (deuxième seuil SMS) ou 10 minutes (premier seuil AC).

La figure 7 représente un autre exemple d'une fonction mise en œuvre par l'analyseur 16. En effet, lorsque deux événements indiquent un mouvement, et que ces événements sont séparés par une durée inférieure à un troisième seuil indiquant qu'un arrêt court n'est pas possible, alors les événements intermédiaires sont modifiés de sorte que leurs marqueurs de déplacement indiquent un mouvement.

Ainsi, dans une opération 700, un indice i de boucle est initialisé à 0. Ensuite dans des opérations 705, 710 et 715 similaires aux opérations 605, 610 et 615, l'évènement d'indice i est testé et incrémenté jusqu'à trouver un événement indiquant un mouvement. La seule différence est que l'opération 605 teste si l'évènement est de type arrêt court alors que l'opération 705 teste si l'évènement est de type mouvement.

Ensuite, une boucle est lancée afin de chercher l'évènement d'indice j dont le marqueur de déplacement indique un mouvement et dont le marqueur de temps indique une durée inférieure au troisième seuil MS lorsque comparé au marqueur de temps de l'évènement d'indice i.

Ainsi, dans une opération 720, un indice j est défini comme égal à i plus 1, puis dans une opération 725 une durée T entre le marqueur de temps de l'évènement d'indice j et le marqueur de temps de l'évènement d'indice i est calculée.

Ensuite, dans une opération 730, la durée T est comparée au troisième seuil afin de déterminer si celui-ci est dépassé ou pas. Si c'est le cas, alors un test similaire à celui de l'opération 710 est réalisé dans une opération 735. Si c'est le cas, alors l'indice i est mis à jour avec l'indice j dans une opération 740, et le prochain événement indiquant un mouvement est recherché avec l'opération 705. Si ce n'est pas le cas, alors la fonction se termine dans une opération 799.

Si la durée T est inférieure au troisième seuil, alors dans une opération 745, un test détermine si l'évènement d'indice j indique un arrêt court. Si c'est le cas, alors dans une opération 750, un test détermine s'il s'agit de la dernière opération de la liste E. Si c'est le cas, alors la fonction se termine avec l'opération 799. Sinon, alors l'indice j est incrémenté dans une opération 755 et la boucle reprend avec l'opération 725 jusqu'à trouver un deuxième événement indiquant un mouvement, ou jusqu'à ce que le troisième seuil MS soit dépassé.

Lorsqu'un deuxième événement indiquant un mouvement est trouvé dans l'opération 745, une fonction MMove() est exécutée dans une opération 760. La fonction MMove() reçoit comme arguments les indices i et j, pour modifier les marqueurs de déplacement des événements entre ces indices en mouvement. Enfin, dans une opération 765, l'indice i est mis à jour avec j (puisque l'évènement d'indice j indique un mouvement), et la boucle reprend avec l'opération 720.

Dans l'exemple décrit ici, le troisième seuil MS est d'environ 15 minutes. Ainsi, tous les événements associés à un arrêt court entre deux événements associés à un mouvement et séparés de moins de 15 minutes. En variante, le seuil MS pourrait être plus important, et par exemple être d'une heure. Dit autrement, cette fonction revient à considérer qu'un arrêt court entre deux mouvements n'est pas une anomalie si elle dure plus longtemps que le troisième seuil MS.

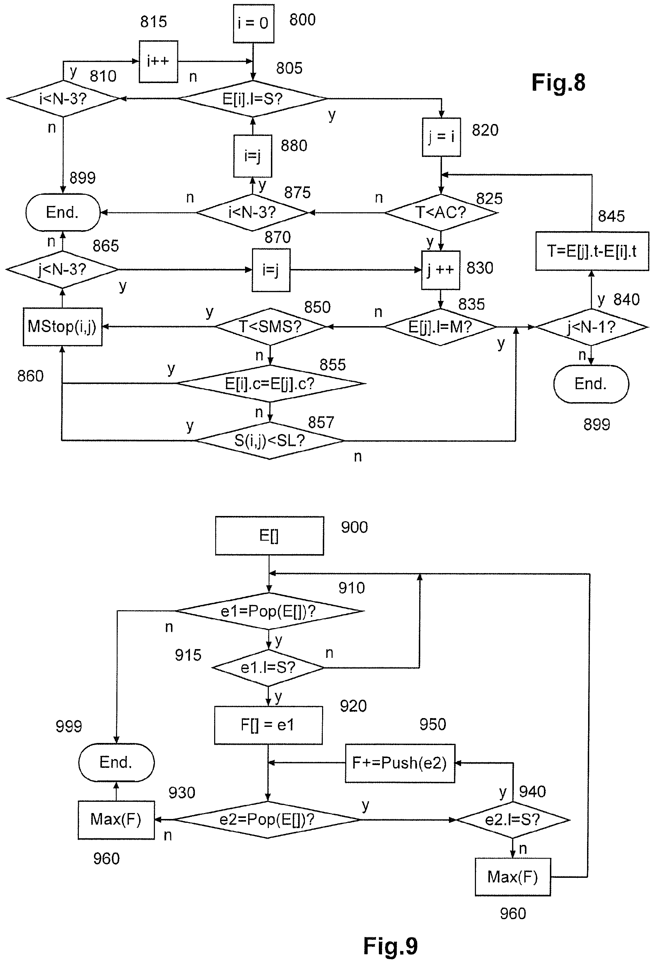

La figure 8 représente un autre exemple d'une fonction mise en œuvre par l'analyseur 16. Cette fonction peut être vue comme une variante de la fonction représentée sur la figure 4, ou comme un complément à celle-ci, qui peut par exemple être exécutée après la fonction de la figure 7.

Dans cette fonction la structure est similaire, mais les conditions recherchées diffèrent :
- la première condition, la moins contraignante, diffère en ce que les cellules de localisation associées aux deux évènements ne sont pas identiques, le premier seuil étant lui aussi identique, et la vitesse de déplacement entre les deux arrêts courts extrême devant être inférieure à une vitesse seuil SL,
- la deuxième condition est similaire à la deuxième condition de la fonction de la figure 4, le deuxième seuil étant identique, mais les cellules de localisation doivent ici être identiques.

La fonction de la figure 8 étant très proche de celle de la figure 6, les références numériques ont été maintenues identiques, en adaptant la centaine. En fait, seules les opérations 850 et 855 diffèrent des opérations 650 et 655, une opération 857 étant ajoutée.

L'opération 850 teste la seconde condition, et la combinaison des opérations 855 et 857 teste la première condition. Dans la pratique, la première condition ne devrait pas être remplie, dans la mesure où elle correspond à la même première condition que pour la fonction de la figure 4. Mais elle permet de s'assurer que la fonction de la figure 5 ou toute autre fonction exécutée précédemment n'a pas introduit de cas non souhaité.

L'opération 857 teste si la vitesse « à vol d'oiseau » entre les cellules de localisation associées aux événements d'indice i et j est inférieure à une vitesse seuil SL d'environ 10 km/h. Elle est calculée en divisant la distance entre les centres des cellules de localisation respectives par la durée entre les deux évènements. Ainsi, dans le cas où un événement de type bruit (par exemple si le dispositif de communication mobile s'attache à une station éloignée par accident) pourrait faire croire à un déplacement entre les événements i et j, ce test permet de le corriger. L'opération 855 n'est également pas supposée se produire dans la pratique, mais, si cela devait être le cas, elle permet de ne pas avoir à calculer la vitesse dans l'opération 857 ce qui représente un gain de temps précieux.

Une fois que l'analyseur 16 a exécuté les fonctions des figures 4 à 8, il va simplifier les données résultantes pour produire les données de trajectoire. Pour cela, l'analyseur 16 va fusionner toutes les données de signalisations successives indiquant un arrêt court, et les associer, pour une durée totale correspondant à la différence entre les marqueurs de temps des événements extrêmes, à la cellule de localisation la plus représentée.

La figure 9 représente un exemple de réalisation de cette fonction. Ainsi, dans une opération 900, la liste d'évènements E[] modifiée tel que précédemment est utilisée comme point de départ.

Ensuite, une boucle va dépiler cette liste et agréger les événements indiquant un arrêt court lorsque nécessaire. Pour cela, dans une opération 910, la liste E[] est dépilée dans un événement e1. Lorsque la liste est vide, la fonction se termine dans une opération 999. Dans une opération 915, un test détermine si l'évènement e1 indique un arrêt court. Lorsque ce n'est pas le cas, l'opération 910 est répétée.

Ensuite, dans une opération 920, une liste F[] est initialisée avec e1. La liste F[] va recevoir tous les événements successifs indiquant un arrêt court. Dans une opération 930, la liste E[] est à nouveau dépilée, cette fois dans un événement e2. S'il y a pas un événement e2, alors dans une opération 940, un test détermine si l'évènement e2 concerne un arrêt court. Si c'est le cas, alors l'évènement e2 est introduit dans la liste F[] dans une opération 950, et l'opération 920 est répétée. Lorsque le prochain événement e2 qui indique un mouvement est trouvé dans l'opération 940, ou lorsque l'opération 930 indique que la liste E[] se termine par une suite d'arrêts courts, une fonction Max() recevant la liste F[] comme argument est exécutée dans une opération 960. La fonction Max() a pour fonction la fusion des événements de la liste F[], en choisissant la cellule de localisation la plus représentée en terme de durée dans la liste F[], et en résumant tous les événements de cette liste en un seul événement dont la durée correspond à la différence entre les marqueurs de temps les plus extrêmes de la liste F[], associée à la cellule de localisation choisie.

Ainsi, les données de trajectoire produites en sortie de l'analyseur 16 contiennent des suites d'évènements indiquant un mouvement et/ou un unique événement indiquant un arrêt court.

Dans l'exemple décrit ici, l'analyseur exécute les fonctions des figures 5 à 9 séquentiellement, et de manière successive. Ainsi, l'analyseur exécute d'abord la fonction de la figure 3 sur l'ensemble des données, puis la fonction de la figure 4 sur les données résultantes, etc. Ces fonctions successives permettent de réduire le bruit naturel des données de signalisation et de réduire leur nombre, en produisant des données de trajectoire qui acquièrent un « sens » lié à la notion de déplacement autre qu'à pied.

Les suites d'évènements qui en résultent sont particulièrement avantageuses car elles présentent une certaine régularité qui permet de rassembler les trajets entre eux pour établir des statistiques et/ou rattacher une suite d'évènement à un parcours connu. De plus, elles permettent de réduire grandement le bruit qui est inhérent aux données de signalisation utilisées en entrée, ainsi que de réduire la quantité de calculs pour les comparer entre elles, en permettant de définir des épisodes signifiants.

Ainsi, les données de trajectoire qui sont produites représentent des segments qui représentent un déplacement tangible, même s'il ne correspond pas parfaitement aux données de signalisation originelles. Elles constituent une abstraction des données de signalisation qui permet, par leur nature qui désigne un mouvement ou un arrêt court de segmenter les données de signalisation originales en épisodes significatifs.

De plus, la notion d'arrêt court permet de déterminer concrètement une présence dans un lieu donné pour une plage de temps donnée, ce qui est presque impossible à partir des données de signalisation seules. Il devient en outre possible de comparer des trajectoires avec des trajectoires de référence.

Enfin, les données de trajectoire constituent une forme de compression des données de signalisation : cela rend possible des calculs sur de grands volumes de données de localisation. Par exemple, la Demanderesse a pu réduire un volume de données associées à un aéroport d'environ 4To à seulement 100Go. Cette réduction a permis de rendre le traitement des données de trajectoire possible, alors qu'il ne l'était pas avec la masse de données originelle, sauf à ajouter une quantité de serveurs importante.

En variante, l'extracteur 6 pourrait être réalisé de manière plus simple, en appliquant seulement certaines des fonctions présentées avec les figures 4 à 9. De plus, l'extracteur 6 applique les mêmes fonctions aux données de trajectoire associées à un identifiant de téléphonie mobile et aux données de trajectoire associées à un identifiant de réseau informatique. En variante, des fonctions différentes pourraient être appliquées, afin de tenir compte des natures distinctes de ces types de réseau. Toujours en variante, une fois que les données de trajectoires ont été calculées pour tous les identifiants, les données de trajectoire associées à un même identifiant pourraient être regroupées pour ne former qu'un seul jeu de données de trajectoire par identifiant.

Dans tous les cas, les seuils associés à la détection de trajectoires pour un identifiant de téléphonie mobile et les seuils associés à la détection de trajectoire pour un identifiant de réseau informatique ne seront généralement pas les mêmes, car les déplacements associés sont distincts. En effet, dans le cas des identifiants de réseau informatique, l'utilisateur sera souvent en train de marcher, ce qui sera moins le cas pour les identifiants de téléphonie mobile.

De plus, pour tenir compte des différences de vitesse de déplacement associées d'une part au réseau de téléphonie mobile et d'autre part au réseau informatique, une opération supplémentaire de lissage des données de trajectoire pourra être réalisée.

Sur la base des données de trajectoire 18 déterminées par l'extracteur 6, l'apparieur 8 va produire des paires d'identifiant de téléphonie mobile et d'identifiant de réseau informatique, conformément à ce qui est décrit avec la figure 10.

Dans une opération 1000, l'apparieur 8 reçoit les données de trajectoire 12 sous la forme d'une liste TR, une copie TR1 de la liste TR, ainsi que deux seuils m1 et m2.

Dans une opération 1005, la liste TR1 est dépilée par une fonction Pop() et retourne des données de trajectoire 10 tr associées à un identifiant de téléphonie mobile ou à un identifiant de réseau informatique. Lorsqu'il ne reste plus de données de trajectoire dans la liste TR1, l'opération 200 se termine.

Ensuite, dans une opération 1010, une fonction Excl() reçoit les données de trajectoire tr est teste si celles-ci doivent être écartées en fonction des conditions d'appairage souhaitées.

Par exemple, pour l'utilisation du dispositif 2 dans un centre commercial, il n'est pas utile de prendre en compte les données de trajectoire des dispositifs du personnel travaillant dans le centre commercial. Pour cela, la fonction Excl() pourra filtrer les données de trajectoire associées à un identifiant qui montrent des connexions quotidiennes (du type entre 4 et 6 fois par semaine) à des heures de travail (en excluant les heures de repas par exemple).

De même, il peut être utile de filtrer les données de trajectoire associées à des identifiants ne se connectant que le soir, hors des horaires d'ouverture, puisque ces données correspondent vraisemblablement à du personnel travaillant la nuit, ou à des personnes vivant à proximité du centre commercial, mais travaillant ailleurs (et donc peu susceptibles de le visiter). De nombreuses règles d'exclusion pourront être envisagées selon l'application recherchée.

Ainsi, l'opération 1010 est optionnelle en ce sens qu'elle n'est pas nécessaire au fonctionnement du dispositif 2, mais elle est néanmoins très avantageuse car elle permet de réduire le nombre de comparaisons dans l'opération 210. Or, comme il apparaîtra dans la suite, cette opération présente une complexité de type O(N²) où N est le nombre de données de trajectoire.

Si la fonction Excl() détermine que les données de trajectoire tr ne doivent pas faire l'objet d'un appairage, celles-ci, ainsi que toutes les autres données de trajectoire correspondant au même identifiant sont retirées des listes TR et TR1, et la fonction reprend avec l'opération 1005. Sinon, l'apparieur 8 poursuit dans une opération 1015 avec la mise à zéro de variables v et w. La variable v vise à éviter les appairages trop agressifs, et la variable w sert à recevoir les données de trajectoire à associer, comme cela sera expliqué plus bas.

Après l'opération 1015, une fonction Scrt() est exécutée dans une opération 1020. La fonction Scrt() vise, comme l'opération 1010 à limiter la quantité de calculs. Cette opération peut donc être optionnelle, même si elle est très avantageuse.

Dans sa version la plus simple, la fonction Scrt() élimine de la liste TR toute les données de trajectoire qui correspondent au même type d'identifiant que celui associé aux données de trajectoire tr (par exemple toutes les données de trajectoire associées à un identifiant de téléphonie mobile si les données de trajectoire tr désignent un identifiant de téléphonie mobile), puisque le but est d'appairer ensemble des identifiants de type distinct. Cela pourrait aussi être géré en stockant les données de trajectoire associées à un identifiant de téléphonie mobile dans une première liste, et les données de trajectoire associées à un identifiant de réseau informatique dans une deuxième liste.

De manière plus sophistiquée, les données de trajectoire peuvent aussi être filtrées pour ne garder que celles qui sont contenues dans une plage horaire entourant la plage horaire associée aux données de trajectoire tr, par exemple 1h avant et 1h après. En effet, il n'est pas pertinent de chercher à associer des données de trajectoire trop éloignées dans le temps.

Selon une autre variante, il est possible de comparer les occurrences des données de trajectoire associées à chaque identifiant de téléphonie mobile et chaque identifiant de réseau informatique. En effet, il est inutile de comparer les données de trajectoire associées à deux identifiants présentant un nombre très différent d'occurrences, puisqu'il n'y a que très peu de chances que ceux-ci correspondent à un seul et même dispositif mobile.

Selon encore une autre variante, il est possible d'éliminer les données de trajectoire associées à un identifiant de téléphonie mobile ou à un identifiant de réseau informatique qui ne présente qu'un nombre limité d'occurrences, car il y a trop peu de chance de réussir à appairer ces données.

Lorsque l'un ou plusieurs des filtres ci-dessus ont été appliqués, les données de trajectoire résultantes sont stockées dans une liste TR2.

Une boucle commence alors dans laquelle la liste TR2 va être dépilée pour essayer de déterminer si des données de trajectoire peuvent être associées aux données de trajectoire tr.

Ainsi, dans une première opération de boucle 1025, la liste TR2 est dépilée au moyen de la fonction Pop() et retourne des données de trajectoire u. Ensuite, dans une opération 1030, une fonction D() reçoit les données de trajectoire tr et u comme arguments, et calcule un valeur de similarité entre ces trajectoires en leur appliquant une mesure de distance.

Cette mesure de distance est dans l'exemple décrit ici et préféré la mesure de distance LCSS (pour « lowest common subsequence »). En variante, les mesures DTW (pour « dynamic time warping ») ou PF (pour « Piciarelly and Foresti ») pourront être utilisées. Des informations sur ces mesures de distance pourront être tirées de l'article « Learning Trajectory Patterns by Clustering: Experimental Studies and Comparative Evaluation » au nom de Morris et al, accessible sur Internet à l'adresse http://cvrr.ucsd.edu/publications/2009/morris_CVPR09.pdf. D'autres mesures pourront également être utilisées.

Le résultat de la fonction D() est stocké dans une variable m, qui est comparé au seuil m2 dans une opération 1035. Le seuil m2 est choisi supérieur au seuil m1. Le fonctionnement est le suivant : la boucle va chercher à appairer les données de trajectoire tr avec des données de trajectoire u telles que la distance entre tr et u est inférieure au seuil ml, mais uniquement si aucunes autres données de trajectoire ne présentent une distance avec les données de trajectoire tr inférieure au seuil m2.

Ainsi, les appairages qui sont réalisés présentent une grande fiabilité : non seulement un seuil de distance maximal est garanti (ml), mais l'on assure en plus qu'aucunes autres données de trajectoires ne s'approchent plus près que le seuil de distance maximal (m2).

Cela est important car il n'existe pas de moyen de vérifier que l'appairage est correct, et il est donc crucial de limiter les cas d'appairages erronés, afin de ne pas déranger les utilisateurs des dispositifs correspondants.

Par conséquent, si l'opération 1035 indique que la valeur m est supérieure au seuil m2, la boucle reprend avec l'opération 1025. Sinon, la valeur m est à nouveau comparée, cette fois au seuil m1, dans une opération 1040.

Si la valeur m est inférieure au seuil ml, alors dans une opération 1045, les données de trajectoire u sont stockées dans une variable w. Ensuite, ou lorsque la valeur m est supérieure au seuil ml, une opération 1050 teste si la boucle en cours réalise un appairage trop agressif ou pas. Pour cela, la variable v est testée pour déterminée si elle est nulle.

En effet, si v est non nulle, alors il existe deux jeux de données de trajectoire dont la distance aux données de trajectoire tr est inférieure au seuil m2, ce qui n'est pas acceptable. Dans ce cas, la boucle d'appairage se termine pour les données de trajectoire t, et la fonction Match() reprend avec l'opération 1005.

Si l'opération 1050 indique que la variable v est nulle, alors celle-ci est initialisée dans une opération 1055. La variable v peut être réalisée sous la forme d'un drapeau (« flag » en anglais) afin d'économiser des ressources.

Ensuite, la boucle d'appairage reprend avec l'opération 1025, jusqu'à ce que la liste TR2 soit vide ou qu'un appairage trop agressif soit détecté. Lorsque la liste TR2 est vide, une fonction Ass() est exécutée dans une opération 1060. La fonction Ass() reçoit comme argument les données de trajectoire tr et la variable w.

Si la variable w est nulle, la fonction Ass() ne fait rien. Si la variable w a été remplie lors de la boucle d'appairage, la fonction Ass() va créer un couple associant l'identifiant de téléphonie mobile ou l'identifiant de réseau informatique associé aux données de trajectoire tr et l'identifiant de réseau informatique ou l'identifiant de téléphonie mobile associé aux données de trajectoire w.

En outre, dans ce cas, il n'est plus nécessaire de comparer les autres données de trajectoire associées au même identifiant que les données de trajectoire tr, et la fonction Ass() retire donc celles-ci de la liste TR, ainsi que les données de trajectoire associées au même identifiant que les données de trajectoire w.

Enfin, la fonction Match() reprend avec l'opération 1005, jusqu'à ce que la liste TR soit vide.

Un certain nombre de variantes apparaîtront assez rapidement au vu de ce qui précède. Ainsi, si la mesure de distance est commutative, la liste TR peut être préalablement ordonnée pour contenir en premier les données de trajectoire associées à un identifiant de téléphonie mobile ou les données de trajectoire associées à un identifiant de réseau informatique, et la fonction Match() peut s'arrêter dès que toutes les données de trajectoire associées à un type d'identifiant ont été traitées.

De même, la description qui précède utilise toujours les données de trajectoire comme variable. Néanmoins, des optimisations pourront être réalisées en utilisant des identifiants désignant ces données ainsi qu'en incluant dans les données de trajectoire l'identifiant de téléphonie mobile ou l'identifiant de réseau informatique qui leur correspond, et/ou le nombre de données de trajectoire associées à cet identifiant et/ou d'autres informations comme les plages horaires associées, etc.

Dans l'exemple décrit avec la figure 10, il existe une pluralité de données de trajectoire pour chaque identifiant. En variante, lorsque les données de trajectoire associées à un identifiant donné ont été rassemblées, les opérations de la figure 10 pourraient être adaptées en conséquence.

Une fois que les données de trajectoire ont été traitées et que les identifiants de téléphonie mobile ont été associés aux identifiants de réseau informatique, la fonction Detect() peut valoriser ces paires en réalisant un géorepérage actif ou passif des identifiants faisant partie d'une paire.

Ainsi, dès qu'un tel identifiant est détecté aux abords d'une zone d'intérêt, un message peut être transmis, sur le réseau de téléphonie mobile ou sur le réseau informatique, sous forme de message textuel ou multimédia. Cela peut être très utile pour diffuser des informations critiques (incendie, accident, personne recherchée, etc.), ou encore pour offrir des services aux utilisateurs dans la zone concernée (pour leur indiquer des services qui pourraient les intéresser, leur proposer des réductions, etc.).

Ainsi, l'émetteur 10 qui exécute la fonction Detect() peut inclure un émetteur de téléphonie mobile ou de réseau informatique ou envoyer les ordres à un tel émetteur. De même, l'émetteur 10 peut réaliser la fonction de géorepérage actif ou passif, ou être sollicité en réponse à la détection d'un identifiant de téléphonie mobile ou d'un identifiant de réseau informatique.

L'invention permet également d'associer un identifiant de téléphonie mobile et un identifiant de réseau informatique de deux dispositifs de télécommunication distincts mais transportés et/ou utilisés par une même personne.

## Revendications

1. Dispositif de communication comprenant :
- une mémoire (4) pour recevoir des données de signalisation, associant un marqueur de temps, des identifiants de signalisation, certains au moins des identifiants de signalisation désignant une cellule de localisation, et un identifiant de dispositif mobile de communication comprenant un identifiant de téléphonie mobile ou un identifiant de réseau informatique,
- un extracteur (6) agencé pour calculer des données de trajectoire, à partir des données de signalisation comprenant des marqueurs de temps désignant des instants consécutifs associées à un unique identifiant de téléphonie mobile ou un unique identifiant de réseau informatique, et
- un apparieur (8) agencé pour calculer une valeur de similarité entre données de trajectoire, et pour en tirer une pluralité de paires qui associent chacune un identifiant de téléphonie mobile et un identifiant de réseau informatique en fonction de la valeur de similarité calculée pour des données de trajectoire qui leurs sont associées,
- un émetteur (10) agencé, à détection d'un identifiant de téléphonie mobile ou de réseau informatique dans une zone choisie, pour communiquer avec le dispositif détecté dont l'identifiant de téléphonie mobile ou l'identifiant de réseau informatique appartient à une paire issue de l'apparieur (8),
**caractérisé en ce que**
l'extracteur (6) comprend :
- un classificateur (14) capable, pour un identifiant de téléphonie mobile donné et/ou un identifiant de réseau informatique donné de marquer les données de signalisation qui lui sont associées avec un marqueur de déplacement indiquant un état choisi parmi une liste comprenant au moins un mouvement et un arrêt court,
- un analyseur (16) capable de traiter les données de signalisation marquées en fonction des marqueurs de déplacement afin de produire des données de trajectoire associant d'une part un identifiant de dispositif mobile de communication donné et d'autre part une suite de marqueurs de déplacement associés chacun à une cellule de localisation et à un marqueur de temps, de sorte que deux marqueurs de déplacement dont les marqueurs de temps indiquent qu'ils se succèdent désignent des états distincts, en appliquant l'une au moins des règles suivantes :
a) la modification de marqueurs de déplacement quelconques en marqueurs de déplacement indiquant un arrêt court, lorsque, pour deux marqueurs de déplacement indiquant un arrêt court associé à une unique cellule de localisation, le nombre de marqueurs de déplacements dont les marqueurs de temps indiquent qu'ils sont entre ces deux marqueurs de déplacement est inférieur ou égal à 4,
b) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court et que les marqueurs de temps associés à ces derniers indiquent une durée inférieure à un premier seuil,
c) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court qui sont associés à une même cellule de localisation et que les marqueurs de temps associés à ces derniers indiquent une durée inférieure à un deuxième seuil,
d) la modification de marqueurs de déplacement indiquant un arrêt court en marqueurs de déplacement indiquant un mouvement lorsque les marqueurs de temps qui leur sont associés indiquent qu'ils sont précédés et suivis par des marqueurs de déplacement indiquant un mouvement et que les marqueurs de temps associés à ces derniers indiquent une durée inférieure à un troisième seuil, et, après avoir appliqué l'une au moins des règles suivantes, en appliquant :
e) la fusion de marqueurs de déplacement indiquant un arrêt court dont les marqueurs de temps indiquent qu'ils sont consécutifs, et l'association au marqueur de déplacement résultant de la cellule de localisation associée aux marques de déplacement dont les marqueurs de temps représentent la durée la plus importante et d'un marqueur de temps correspondant à la somme des durées des marqueurs de temps associés.

2. Dispositif selon la revendication 1, dans lequel l'apparieur (8) est agencé pour écarter les données de trajectoire associées à un identifiant de téléphonie mobile ou à un identifiant de réseau informatique qui désignent un même emplacement et qui, pour une période temporelle donnée, présentent un nombre d'occurrences supérieur à un seuil choisi.

3. Dispositif selon l'une des revendications précédentes, dans lequel l'apparieur (8) est agencé pour calculer la valeur de similarité à partir d'une distance choisie dans un groupe comprenant le DTW "dynamic time warping," le LCSS "lowest common subsequence", et la distance PF "Piciarelly and Foresti".

4. Dispositif selon l'une des revendications précédentes, dans lequel l'apparieur (8) est agencé pour associer un identifiant de téléphonie mobile à un identifiant de réseau informatique donnés lorsque la valeur de similarité de leurs données de trajectoire associées est inférieure à un seuil choisi.

5. Dispositif selon la revendication 4, dans lequel l'apparieur (8) est agencé pour dissocier un identifiant de téléphonie mobile à un identifiant de réseau informatique associés lorsque la valeur de similarité entre les données de trajectoire associées audit identifiant de téléphonie mobile et des données de trajectoire associées à un autre identifiant de réseau informatique ou la valeur de similarité entre les données de trajectoire associées audit identifiant de réseau informatique et des données de trajectoire associées à un autre identifiant de téléphonie mobile est inférieure à un seuil choisi.

6. Dispositif selon l'une des revendications précédentes, dans lequel l' émetteur (10) est agencé, à détection d'un identifiant de réseau informatique associé par l'apparieur (8) à un identifiant de téléphonie mobile, pour émettre un message téléphonique de type textuel ou multimédia vers le dispositif désigné par ledit identifiant de téléphonie mobile.

7. Dispositif selon l'une des revendications 1 à 5, dans lequel l' émetteur (10) est agencé, à détection d'un identifiant de téléphonie mobile associé par l'apparieur (8) à un identifiant de réseau informatique, pour émettre un message informatique de type textuel ou multimédia vers le dispositif désigné par ledit identifiant de réseau informatique.

8. Dispositif selon l'une des revendications précédentes, dans lequel le classificateur (14) et l'analyseur (16) sont sont agencés pour être appelés séquentiellement pour produire des données de trajectoire, et/ou dans lequel l'analyseur (16) est agencé pour appliquer la règle a) avant d'appliquer la règle b), et/ou l'analyseur (16) est agencé pour appliquer la règle b) avant d'appliquer la règle c), et/ou dans lequel l'analyseur (16) est agencé pour appliquer la règle c) avant d'appliquer la règle d).

## Patentansprüche

1. Kommunikationsvorrichtung, umfassend:
- einen Speicher (4), um Signalisierungsdaten zu empfangen, die einen Zeitmarker, Signalisierungskennungen, wobei mindestens einige der Signalisierungskennungen eine Lokalisierungszelle bezeichnen, und eine Kennung einer mobilen Kommunikationsvorrichtung, die eine Mobiltelefoniekennung oder eine IT-Netzwerkkennung umfasst, miteinander verknüpfen,
- einen Extrahierer (6), der so eingerichtet ist, dass er auf Grundlage der Signalisierungsdaten, die Zeitmarker umfassen, welche aufeinanderfolgende Zeitpunkte bezeichnen, die mit einer einzigen Mobiltelefoniekennung oder einer einzigen IT-Netzwerkkennung verknüpft sind, Trajektoriendaten berechnet, und
- einen Paarbildner (8), der so eingerichtet ist, dass er einen Ähnlichkeitswert zwischen Trajektoriendaten berechnet und aus diesen eine Vielzahl von Paaren, die jeweils eine Mobiltelefoniekennung und eine IT-Netzwerkkennung miteinander verknüpfen, in Abhängigkeit von dem Ähnlichkeitswert, der für mit ihnen verknüpfte Trajektoriendaten berechnet wurde, ableitet,
- einen Sender (10), der so eingerichtet ist, dass er bei Erkennen einer Mobiltelefonie- oder IT-Netzwerkkennung in einer ausgewählten Zone mit der erkannten Vorrichtung kommuniziert, deren Mobiltelefoniekennung oder IT-Netzwerkkennung zu einem vom Paarbildner (8) ausgegebenen Paar gehört,
**dadurch gekennzeichnet, dass** der Extrahierer (6) umfasst:
- einen Klassifizierer (14), der in der Lage ist, bei einer gegebenen Mobiltelefoniekennung und/oder einer gegebenen IT-Netzwerkkennung die mit ihr verknüpften Signalisierungsdaten mit einem Bewegungsmarker zu markieren, der einen Zustand, ausgewählt aus einer Liste, die mindestens eine Bewegung und einen kurzen Stopp umfasst, anzeigt,
- einen Analysierer (16), der in der Lage ist, die markierten Signalisierungsdaten in Abhängigkeit von den Bewegungsmarkern zu verarbeiten, um Trajektoriendaten zu produzieren, die zum einen eine Kennung einer gegebenen mobilen Kommunikationsvorrichtung und zum anderen eine Folge von Bewegungsmarkern, die jeweils mit einer Lokalisierungszelle und einem Zeitmarker verknüpft sind, so miteinander verknüpfen, dass zwei Bewegungsmarker, deren Zeitmarker anzeigen, dass sie aufeinanderfolgen, unterschiedliche Zustände bezeichnen, indem er mindestens eine der folgenden Regeln anwendet:
a) Ändern von beliebigen Bewegungsmarkern zu Bewegungsmarkern, die einen kurzen Stopp anzeigen, wenn bei zwei Bewegungsmarkern, die einen kurzen Stopp anzeigen, der mit einer einzigen Lokalisierungszelle verknüpft ist, die Anzahl von Bewegungsmarkern, deren Zeitmarker anzeigen, dass sie zwischen diesen zwei Bewegungsmarkern liegen, kleiner oder gleich 4 ist,
b) Ändern von Bewegungsmarkern, die eine Bewegung anzeigen, zu Bewegungsmarkern, die einen kurzen Stopp anzeigen, wenn die mit ihnen verknüpften Zeitmarker anzeigen, dass ihnen Bewegungsmarker vorausgehen und nachfolgen, die einen kurzen Stopp anzeigen, und die mit letzteren verknüpften Zeitmarker eine Zeitspanne anzeigen, die kleiner als eine erste Schwelle ist,
c) Ändern von Bewegungsmarkern, die eine Bewegung anzeigen, zu Bewegungsmarkern, die einen kurzen Stopp anzeigen, wenn die mit ihnen verknüpften Zeitmarker anzeigen, dass ihnen Bewegungsmarker vorausgehen und nachfolgen, die einen kurzen Stopp anzeigen und die mit der gleichen Lokalisierungszelle verknüpft sind, und die mit letzteren verknüpften Zeitmarker eine Zeitspanne anzeigen, die kleiner als eine zweite Schwelle ist,
d) Ändern von Bewegungsmarkern, die einen kurzen Stopp anzeigen, zu Bewegungsmarkern, die eine Bewegung anzeigen, wenn die mit ihnen verknüpften Zeitmarker anzeigen, dass ihnen Bewegungsmarker vorausgehen und nachfolgen, die eine Bewegung anzeigen, und die mit letzteren verknüpften Zeitmarker eine Zeitspanne anzeigen, die kleiner als eine dritte Schwelle ist,
und indem er, nachdem er mindestens eine der folgenden Regeln angewendet hat, Folgendes anwendet:
e) Verschmelzen von Bewegungsmarkern, die einen kurzen Stopp anzeigen und deren Zeitmarker anzeigen, dass sie aufeinanderfolgen, und Verknüpfen der Lokalisierungszelle, die mit den Bewegungsmarkern verknüpft ist, deren Zeitmarker die längste Zeitspanne darstellen, und eines Zeitmarkers, der der Summe der Zeitspannen der verknüpften Zeitmarker entspricht, mit dem resultierenden Bewegungsmarker.

2. Vorrichtung nach Anspruch 1, wobei der Paarbildner (8) so eingerichtet ist, dass er die mit einer Mobiltelefoniekennung oder mit einer IT-Netzwerkkennung verknüpften Trajektoriendaten verwirft, die den gleichen Ort bezeichnen und die bei einem gegebenen Zeitraum eine Häufigkeit aufweisen, die größer als eine ausgewählte Schwelle ist.

3. Vorrichtung nach einem der vorstehenden Ansprüche, wobei der Paarbildner (8) so eingerichtet ist, dass er den Ähnlichkeitswert auf Grundlage einer Distanz berechnet, ausgewählt aus einer Gruppe, die DTW, ,,Dynamic Time Warping", LCSS, "Lowest Common Subsequence", und die PF-, "Piciarelly und Foresti", Distanz umfasst.

4. Vorrichtung nach einem der vorstehenden Ansprüche, wobei der Paarbildner (8) so eingerichtet ist, dass er eine gegebene Mobiltelefoniekennung mit einer gegebenen IT-Netzwerkkennung verknüpft, wenn der Ähnlichkeitswert ihrer verknüpften Trajektoriendaten kleiner als eine ausgewählte Schwelle ist.

5. Vorrichtung nach Anspruch 4, wobei der Paarbildner (8) so eingerichtet ist, dass er eine Mobiltelefoniekennung von einer verknüpften IT-Netzwerkkennung trennt, wenn der Ähnlichkeitswert zwischen den Trajektoriendaten, die mit der Mobiltelefoniekennung verknüpft sind, und Trajektoriendaten, die mit einer anderen IT-Netzwerkkennung verknüpft sind, oder der Ähnlichkeitswert zwischen den Trajektoriendaten, die mit der IT-Netzwerkkennung verknüpft sind, und Trajektoriendaten, die mit einer anderen Mobiltelefoniekennung verknüpft sind, kleiner als eine ausgewählte Schwelle ist.

6. Vorrichtung nach einem der vorstehenden Ansprüche, wobei der Sender (10) so eingerichtet ist, dass er bei Erkennen einer IT-Netzwerkkennung, die vom Paarbildner (8) mit einer Mobiltelefoniekennung verknüpft wurde, eine telefonische Nachricht vom Text- oder Multimediatyp an die von der Mobiltelefoniekennung bezeichnete Vorrichtung sendet.

7. Vorrichtung nach einem der Ansprüche 1 bis 5, wobei der Sender (10) so eingerichtet ist, dass er bei Erkennen einer Mobiltelefoniekennung, die vom Paarbildner (8) mit einer IT-Netzwerkkennung verknüpft wurde, eine IT-Nachricht vom Text- oder Multimediatyp an die von der IT-Netzwerkkennung bezeichnete Vorrichtung sendet.

8. Vorrichtung nach einem der vorstehenden Ansprüche, wobei der Klassifizierer (14) und der Analysierer (16) so eingerichtet sind sind, dass sie nacheinander aufgerufen werden, um Trajektoriendaten zu produzieren, und/oder wobei der Analysierer (16) so eingerichtet ist, dass er die Regel a) anwendet, bevor er die Regel b) anwendet, und/oder der Analysierer (16) so eingerichtet ist, dass er die Regel b) anwendet, bevor er die Regel c) anwendet, und/oder wobei der Analysierer (16) so eingerichtet ist, dass er die Regel c) anwendet, bevor er die Regel d) anwendet.

## Claims

1. A communication device comprising:
- a memory (4) for receiving signaling data, associating a time marker, signaling identifiers, at least some of the signaling identifiers designating a location cell, and a mobile communication device identifier comprising a mobile telephony identifier or a computer network identifier,
- an extractor (6) arranged to calculate trajectory data, from the signaling data comprising time markers designating consecutive instants associated with a unique mobile telephony identifier or a unique computer network identifier, and
- a matcher (8) arranged to calculate a similarity value between trajectory data, and to obtain therefrom a plurality of pairs that each associate a mobile telephony identifier and one computer network identifier as a function of the similarity value calculated for trajectory data which are associated with them,
- a transmitter (10) arranged, upon detection of a mobile telephony or computer network identifier in a chosen area, to communicate with the detected device the mobile telephony or computer network identifier of which beongs to a pair derived from the matcher (8),
**characterized in that** the extractor (6) comprises:
- a classifier (14) capable, for a given mobile telephony identifier or a given computer network identifier, of marking the signaling data which are associated with it with a displacement marker indicating a state chosen from a list comprising at least a movement and a short stop,
- an analyzer (16) capable of processing the marked signaling data as a function of the displacement markers in order to produce trajectory data associating, on the one hand, a given mobile communication device identifier and, on the other hand, a series of displacement markers each associated with a location cell and with a time marker, such that two displacement markers whose time markers indicate that they follow one another designate distinct states, by applying at least one of the following rules:
a) the modification of any displacement markers into displacement markers indicating a short stop, when, for two displacement markers indicating a short stop associated with a single location cell, the number of displacement markers whose time markers indicate that they are between these two displacement markers is less than or equal to 4,
b) the modification of displacement markers indicating a movement into displacement markers indicating a short stop when the time markers which are associated with them indicate that they are preceded and followed by displacement markers indicating a short stop and that the time markers associated with the latter indicate a duration below a first threshold,
c) the modification of displacement markers indicating a movement into displacement markers indicating a short stop when the time markers which are associated with them indicate that they are preceded and followed by displacement markers indicating a short stop which are associated with one and the same location cell and that the time markers associated with the latter indicate a duration below a second threshold,
d) the modification of displacement markers indicating a short stop into displacement markers indicating a movement when the time markers which are associated with them indicate that they are preceded and followed by displacement markers indicating a movement and that the time markers associated with the latter indicate a duration below a third threshold,
e) the merging of displacement markers indicating a short stop whose time markers indicate that they are consecutive, and the association with the resulting displacement marker of the location cell associated with the displacement markers whose time markers represent the greatest duration and a time marker corresponding to the sum of the durations of the associated time markers.

2. The device as claimed in claim 1, wherein the matcher (8) is arranged to discard the trajectory data associated with a mobile telephony identifier or with a computer network identifier which designate one and the same position and which, for a given time period, exhibit a number of occurrences above a chosen threshold.

3. The device as claimed in one of the preceding claims, wherein the matcher (8) is arranged to calculate the similarity value from a distance chosen from a group comprising the DTW ("dynamic time warping"), the LCSS (lowest common subsequence"), and the PF distance ("Piciarelly and Foresti").

4. The device as claimed in one of the preceding claims, wherein the matcher (8) is arranged to associate a given mobile telephony identifier with a given computer network identifier when the similarity value of their associated trajectory data is below a chosen threshold.

5. The device as claimed in claim 4, wherein the matcher (8) is arranged to disassociate a mobile telephony identifier from a computer network identifier, which identifiers are associated, when the similarity value between the trajectory data associated with said mobile telephony identifier and trajectory data associated with another computer network identifier or the similarity value between the trajectory data associated with said computer network identifier and trajectory data associated with another mobile telephony identifier is below a chosen threshold.

6. The device as claimed in one of the preceding claims, wherein the transmitter (10) is arranged, upon detection of a computer network identifier associated by the matcher (8) with a mobile telephony identifier, to transmit a telephone message of text or multimedia type to the device designated by said mobile telephony identifier.

7. The device as claimed in one of claims 1 to 5, wherein the transmitter (10) is arranged, upon detection of a mobile telephony identifier associated by the matcher (8) with a computer network identifier, to transmit a computer message of text or multimedia type to the device designated by said computer network identifier.

8. The device as claimed in one of the preceding claims, wherein the classifier (14) and the analyzer (16) are arranged to be called sequentially to produce trajectory data, and/or wherein the analyzer (16) is arranged to apply the rule a) before applying the rule b), and/or the analyzer (16) is arranged to apply the rule b) before applying the rule c), and/or wherein the analyzer (16) is arranged to apply the rule c) before applying the rule d).
